# EUROPÄISCHE PATENTANMELDUNG

(11) **EP 3 628 426 A1**
(43) Veröffentlichungstag der Anmeldung: **01.04.2020**
(21) Anmeldenummer: 19209750.9
(22) Anmeldetag: 27.05.2016
(51) Int. Cl.: B23B 41/06, B24B 33/02, B24B 33/08

(54) **VERFAHREN ZUR KONIFIZIERUNG EINER BOHRUNG MIT EINEM FEINBOHRWERKZEUG**

(30) Priorität: 26.05.2015 DE 102015209609; 15.03.2016 DE 102016104754
(62) Teilanmeldung aus: 16726529.7
(71) Anmelder: Gehring Technologies GmbH, 73760 Ostfildern (DE)
(72) Erfinder: Wagner, Andreas, 73770 Denkendorf (DE); Wiens, Dr. Andreas, 74343 Sachsenheim (DE); Schamne, Niko, 73760 Ostfildern (DE); Waiblinger, Manuel, 70182 Stuttgart (DE)
(74) Vertreter: DREISS Patentanwälte PartG mbB

(57) **Zusammenfassung**

Verfahren zur Konifizierung einer Bohrung mit einem Feinbohrwerkzeug, wobei mindestens eine Schneide des Feinbohrwerkzeugs in Abhängigkeit seiner Position in der zu bearbeitenden Bohrung zugestellt wird, wobei der Durchmesser der Bohrung sich nach der Konifizierung über mehr als die halbe Länge der Zylinderbohrung kontinuierlich ändert. Um die Konifizierung der zylinderischen Bohrung abzuschliessen folgt ein Prozessschritt "Konisch Honen mit dynamischer Zustellung" auf das Feinbohren, wobei die Zustellung der Honleisten gegen die Bohrung in Abhängigkeit von einer Position des Honwerkzeugs in der Bohrung erfolgt.

## Beschreibung

Die Erfindung betrifft ein Verfahren zur Konifizierung einer zylindrischen Bohrung mit einem Honwerkzeug sowie eine Prozesskette zur formgebenden Bearbeitung von zylindrischen Bohrungen.

Die Hersteller von Kraftfahrzeugen stehen vor der Daueraufgabe, den Kraftstoffverbrauch ihrer mit Hubkolbenmotoren ausgestatteten Fahrzeugflotte kontinuierlich zu reduzieren. Bei Hubkolbenmotoren hat die Reibung zwischen den Kolben bzw. den Kolbenringen einerseits und der Zylinderbohrung bis zu 35 % einen großen Anteil an den internen Reibungsverlusten. Daher bietet die Verringerung der Reibung im Bereich der Zylinderbohrung ein erhebliches Potential zur Reduzierung des Kraftfahrstoffverbrauchs.

Ein Ansatz zur Verringerung der Reibung zwischen Kolben und Zylinderbohrung ist das von der Anmelderin entwickelte Formhonen, das ausführlich in der EP 2 170 556 B1 beschrieben wird. Bei diesem Verfahren werden durch Verspannungen bei der Montage und/oder thermische Ausdehnungen der Zylinderbohrung verursachte Abweichungen von der Geometrie eines Zylinders egalisiert indem beim Formhonen komplementäre Erhebungen oder Vertiefungen ausgebildet werden. Dieses Verfahren ist sehr effektiv und wird bei der Herstellung verschiedener Hubkolbenmotoren erfolgreich eingesetzt.

Aus der DE 10 2013 204 714 A1 ist ein Honverfahren bekannt mit dessen Hilfe die Zylinderbohrung einer Brennkraftmaschine eine Flaschenform erhält. Als Flaschenform wird dabei eine Form bezeichnet, bei der die Zylinderbohrung zwei zylindrische Abschnitte aufweist, die einen unterschiedlichen Durchmesser aufweisen. Der Abschnitt mit dem kleineren Durchmesser ist im Bereich des Zylinderkopfes vorgesehen, während der Abschnitt mit dem größeren Durchmesser im Bereich der Kurbelwelle vorgesehen ist. Zwischen diesen Bereichen ist ein kegelstumpfförmiger Übergangsbereich ausgebildet, der etwa 5 % bis 20% der Bohrungslänge einnimmt.

Aus der DE 103 581 50 A1 ist ein Verfahren bekannt mit deren Hilfe, zwei in axialer Richtung einer Zylinderbohrung aufeinanderfolgende Abschnitte mit unterschiedlicher Härte bearbeitet werden können. Dieses Verfahren und das zugehörige Werkzeug sind mit Vorteil einsetzbar, wenn die Zylinderbohrung bereichsweise gehärtet ist und in Folge dessen der gehärtete Abschnitt und der nicht gehärtete Abschnitt auf unterschiedliche Weise gehont werden müssen.

Aus dieser Druckschrift ist es bekannt, die Zylinderbohrung an seinem offenen Ende, das heißt dort, wo später der Zylinderkopf montiert wird, so zu gestalten, dass sich eine Vorweite der Zylinderbohrung ergibt. Dies ist in der Figur 6 dieser Druckschrift grafisch dargestellt. Als Vorweite wird damit eine leichte Aufweitung im oberen Abschnitt der Zylinderbohrung bezeichnet. Dabei betrifft diese Vorweite nur etwa das oberste Viertel der Zylinderbohrung.

Der Erfindung liegt die Aufgabe zu Grunde, Honverfahren, eine Prozesskette sowie geeignete Honwerkzeug zur Durchführung der Verfahren bereitzustellen, welche die kostengünstige und reproduzierbare Herstellung von Zylinderbohrungen erlaubt, bei der die Reibung zwischen den Kolbenringen und besonders zwischen dem Kolbenhemd und der Zylinderbohrung minimiert und in Folge dessen das Emissionsverhalten und der Kraftstoffverbrauch der mit solchen Zylindern ausgestatteten Brennkraftmaschine optimiert ist.

Dabei ist die angestrebte Geometrie der "Zylinderbohrung" ein Kegelstumpf. Unter Umständen umfasst die Bohrung auch einen oder zwei zusätzliche zylindrische Abschnitte. Eine kegelstumpfförmige (Zylinder-) Bohrung im Sinne der Erfindung ist eine Bohrung deren Durchmesser sich über mehr als die halbe Länge, bevorzugt mindestens ¾ der Länge der Zylinderbohrung kontinuierlich ändert. Idealerweise nimmt der Kegelstumpf sogar mehr als 85% in manchen Fällen sogar bis zu 100% der Länge der Zylinderbohrung ein.

Diese Aufgabe wird erfindungsgemäß gelöst durch ein Verfahren zur Konifizierung einer zylindrischen Bohrung bzw. von Teilen einer zylindrischen Bohrung nach den Ansprüchen 1 und 6. Bei dem Verfahren gemäß dem Anspruch 1 wird bevorzugt ein Honwerkzeug eingesetzt, dessen Honleisten eine Länge aufweisen, die kleiner ist als ein Drittel der Länge der zu bearbeiteten Bohrung.

Das erfindungsgemäße Verfahren umfasst die Schritte: Anlegen der Honleisten des Honwerkzeugs an die Bohrung, Honen der Bohrung über ihre gesamte Länge mit einem maximalen Hub Hmax (= OP1 - UP). Dieser Prozessschritt wird im Zusammenhang mit der Erfindung als "Zylindrisch Honen" bezeichnet. Er dient dazu, Geometrie und Durchmesser der (noch) zylindrischen Bohrung auf die gewünschten Werte zu bringen.

Eine Alternative zu dem Prozessschritt "Zylindrisch Honen" ist das Feinbohren. Dieser Prozessschritt wird im Zusammenhang mit der Erfindung als "Zylindrisch Feinbohren" bezeichnet.

Anschließend erfolgt ein Honen der Bohrung mit abnehmendem Hub, wobei ein unterer Umkehrpunkt UP des Honwerkzeugs im Wesentlichen unverändert bleibt. Dies bedeutet, dass der am unteren Umkehrpunkt des Honwerkzeugs liegende Teil der Bohrung häufiger von den Honleisten bearbeitet wird als der am oberen Umkehrpunkt des Honwerkzeugs liegende Teil der Bohrung. Deshalb ist am unteren Umkehrpunkt UP die Zunahme des Durchmessers größer als im Bereich des oberen Umkehrpunkts. In Folge dessen weitet sich die ursprünglich zylindrische Bohrung mit zum unteren Umkehrpunkt immer weiter auf. Das Honen der Bohrung mit abnehmenden Hub wird erfindungsgemäß beendet, sobald der obere Umkehrpunkt OP einen vorgegebenen OP2 (OP = OP2) erreicht hat. Es hat sich gezeigt, dass auf diese Weise eine ursprünglich zylindrische Bohrung in eine leicht konische Bohrung umgewandelt werden kann, wobei sich der Bereich der konische Teil der Bohrung über mehr als 75% der Länge der Bohrung erstreckt. Das erfindungsgemäße Verfahren ist sehr einfach und prozesssicher zu gestalten und es ist dabei möglich eine Bohrung herzustellen, deren Mantellinie weitestgehend einem Kegelstumpf angenähert ist.

Es hat sich weiter als vorteilhaft erwiesen, wenn eine Zustellung des Honwerkzeugs nur dann erfolgt, wenn sich das Honwerkzeug in der Nähe des unteren Umkehrpunkts UP, befindet. Der untere Umkehrpunkt ist der Bereich der Bohrung, die nach der Durchführung des erfindungsgemäßen Verfahrens den größten Durchmesser hat. Die Zustellung des Honwerkzeugs kann beispielsweise nur dann erfolgen, wenn sich das Honwerkzeug zwischen dem vorgegebenen Endwert OP2 und dem unteren Umkehrpunkt UP befindet. OP2 ist der Punkt innerhalb des Hubwegs, der bei allen sich stets verkürzenden Hüben angefahren wird. Innerhalb des Weges von OP2 bis UP wird das Honwerkzeug inkrementell zugestellt. OP2 bestimmt somit den oberen Umkehrpunkt des kleinsten Hubes und somit auch des letzten Hubes des Bearbeitungszyklus. Dieser Abstand OP2-UP ist das kleinste gemeinsam überfahrene Wegintervall aller Hübe. Dadurch wird die Honleiste bei jedem Hub unabhängig von dessen Länge gleichmäßig zugestellt.

Damit die Schnittgeschwindigkeit trotz des abnehmenden Hubs in etwa gleich bleibt, kann mit der Verkürzung des Hubs, die Drehzahl der Honspindel erhöht werden.

Diese Ausgestaltungen des erfindungsgemäßen Verfahrens haben den Vorteil, dass die Zustellung über den gesamten Honprozess unabhängig von dem Hub des Honwerkzeugs ist und daher steuerungstechnisch gut zu beherrschen ist. Wegen der gleichbleibenden Schnittgeschwindigkeit bleibt auch die Beschaffenheit der Oberfläche über die ganze Länge der gehonten Bohrung gleich.

Dieser Prozessschritt wird im Zusammenhang mit der Erfindung als "Konisch Honen mit abnehmendem Hub" bezeichnet.

Außerdem führt die beschriebene Art der Zustellung zu einer verbesserten Geometrie der fertig bearbeiteten konischen Bohrung, weil ein "Einfallen" der Bohrung im Bereich des unteren Umkehrpunkts UP weitestgehend verhindert werden kann. Dadurch kann eine "Flaschenform" der Bohrung mit zwei zylindrischen Abschnitten und einem kurzen kegelstumpfförmigen Zwischenbereich vermieden werden.

Um eine Konizität der bearbeiteten Bohrung über die nahezu gesamte Länge der Bohrung zu erreichen, ist es vorteilhaft, wenn der maximale Hub Hₘₐₓ (=OP1-UP) mehr als doppelt so groß ist wie der minimale Hub Hₘᵢₙ (= OP2-UP). Es ist auch möglich, dass der maximale Hub dreimal oder sogar viermal so groß ist wie der minimale Hub. Je größer dieses Verhältnis ist, desto länger ist der kegelstumpfförmige Teil der Bohrung. Es ist dadurch auch möglich, dass der kegelstumpfförmige Teil sich über die gesamte Länge der Bohrung erstreckt.

Eine Alternative zu dem Prozessschritt "Konisch Honen" ist das "Feinbohren mit dynamischer Zustellung". Dabei wird die Schneide des Feinbohrwerkzeugs in Abhängigkeit seiner Position in der zu bearbeitenden Bohrung zugestellt. Zum Beispiel ist am offenen Ende der Bohrung die Zustellung minimal und nimmt zu je weiter sich das Feinbohrwerkzeug in Richtung des entgegengesetzten Endes der Bohrung bewegt. Der Prozessschritt "Feinbohren mit dynamischer Zustellung" kann die vorgelagerten Prozessschritte "Zylindrisch Honen" und "Zylindrisch Feinbohren" ersetzen.

Um die Konifizierung der zylindrischen Bohrung zu unterstützen oder abzuschließen, kann weiter vorgesehen sein, dass eine Zustellkraft mit der die Honleisten gegen die Bohrung gepresst werden in Abhängigkeit einer Position des Honwerkzeugs in der Bohrung gesteuert wird. In diesem Fall nimmt die Zustellkraft in Richtung des unteren Umkehrpunkts UP zu und in Richtung des oberen Umkehrpunkts ab. Dieser Prozessschritt wird im Zusammenhang mit der Erfindung als "Konisch Honen mit dynamischer Zustellung" bezeichnet.

Die eingangsgenannte Aufgabe wird auch gelöst durch ein Verfahren zur Konifizierung einer zylindrischen Bohrung, wobei die für das Honen relevanten Parameter, insbesondere die Werkstoffhärte und Steifigkeit (verursacht zum Beispiel durch Änderungen der Wandstärke) der Bohrung über die gesamte Länge der Bohrung gleich sind, und umfasst die folgenden Schritte:
Anlegen der Honleisten des Honwerkzeugs an die zu bearbeitende Bohrung, Honen der Bohrung über ihre gesamte Länge mit konstanter Anpresskraft der Honleisten auf die Bohrung ("Zylindrisch Honen").

Anschließend erfolgt das Honen der Bohrung wobei eine Zustellkraft mit der die Honleisten gegen die Bohrung gepresst werden in Abhängigkeit einer Position des Honwerkzeugs in der Bohrung gesteuert wird ("Konisch Honen mit dynamischer Zustellung". Der Prozessschritt "Konisch Honen mit dynamischer Zustellung" kann also nicht nur nach dem "Konisch Honen mit abnehmendem Hub" angewandt werden, sondern es ersetzen.

Auch durch dieses Verfahren wird eine gute Konifizierung der ursprünglich zylindrischen Bohrung erreicht. Je länger der konische Teil der Bohrung ist, desto einfacher und präziser lässt sich die gewünschte Konifizierung erreichen. Daher ändert sich die Zustellkraft in der Regel über nahezu die gesamte Länge (z. B. mehr als 75%) der Bohrung.

Es hat sich als Vorteilhaft erwiesen, wenn die Zustellkraft mit zunehmendem Abstand des Honwerkzeugs von einem Umkehrpunkt ansteigt.

Es ist möglich, dass die Zustellkraft mit zunehmendem Abstand des Honwerkzeugs von einem Umkehrpunkt linear, progressiv oder degressiv ansteigt. Dadurch ist es möglich, Effekte, die zu einer Abweichung von der gewünschten kegelstumpfförmigen Form der Bohrung führen, zu kompensieren. Es ist aber auch möglich, gezielt Abweichungen von einer geometrisch idealen Kegelstumpfform vorzunehmen. So kann beispielsweise die Bohrung im Bereich des unteren Umkehrpunkts besonders weit im Durchmesser sein, sodass die nach dem erfindungsgemäßen Verfahren hergestellte Bohrung - stark übertrieben - wie der Trichter einer Posaune ausgebildet ist. Auch eine sich über der Länge der Bohrung lokal ändernde Steifigkeit der Bohrungswand kann durch eine lokal veränderte Zustellung kompensiert werden.

Bei diesem Verfahren ist möglich, zur Unterstützung der Konifizierung der Bohrungen teilweise mit abnehmendem Hub zu honen, wobei ein unterer Umkehrpunkt UP des Honwerkzeugs im Wesentlichen unverändert bleibt. Auch bei dieser Variante des erfindungsgemäßen Verfahrens ist vorgesehen, dass der Honvorgang beendet wird sobald der obere Umkehrpunkt einen vorgegebenen Endwert erreicht hat.

Es hat sich besonders bewährt, wenn am Ende des Konisch Honens der Hub der Honspindel wieder so weit vergrößert wird, dass die Honleisten mit einem Hub die gesamte Länge der Bohrung bearbeiten, um den gewünschten Kreuzschliff mit möglichst wenigen Umkehrpunkten zu erzielen. Das kann für die Funktionalität der Oberfläche von großer Bedeutung sein.

Die erfindungsgemäßen Verfahren zum Herstellen einer größtenteils kegelstumpfförmigen Bohrung aus einer ursprünglich zylindrischen Bohrung lässt sich in einer Großserienfertigung in eine Prozesskette zur formgebenden Bearbeitung von zylindrischen Bohrungen integrieren, wobei diese Prozesskette das Vorhonen einer Bohrung umfasst. Dabei können ein erstes Honwerkzeug bzw. erste Honleisten eines Honwerkzeugs eingesetzt werden. Das Vorhonen der Bohrung hat die Aufgabe, den gewünschten Durchmesser der noch zylindrischen Bohrung bzw. des noch zylindrisch verbleibenden Abschnitts der Bohrung herzustellen und eine sehr gute geometrische Genauigkeit der Bohrung zu erreichen.

Anschließend wird die ursprünglich zylindrische Bohrung teilweise konifiziert nach einem der Verfahren gemäß der Ansprüche 1 bis 12.

In einem weiteren Schritt wird die konifizierte Bohrung fertiggehont, so Sinne dass die gewünschte Oberflächengüte und -beschaffenheit der konifizierten Bohrung erreicht wird. Dies kann auch mehrstufig stattfinden bei entsprechender Schnittaufteilung.
In einem letzten optionalen Bearbeitungsschritt wird die Bohrung geglättet.

In der nachfolgend dargestellten Tabelle sind die wichtigsten erfindungsgemäßen Prozessketten spaltenweise zusammengestellt. Alle in der Tabelle aufgeführten Prozessketten führen zu einer nichtzylindrischen rotationssymmetrischen Bohrung mit einheitlichem Rauheitsprofil

| **Prozessschritt** | **Prozesskette** | | | | | | | | | |
|---|---|---|---|---|---|---|---|---|---|---|
| Zylindrisch Honen | X | X | X | X | | | | | | |
| konisch Feinbohren | | | | | | | | | X | X |
| Konisch Honen mit abnehmendem Hub | X | | X | | X | | X | | | |
| Konisch Honen mit dynamischer Zustellung | X | X | | X | X | X | | X | X | |
| Glätten mit Federkraft | X | X | X | | X | X | X | | X | X |

Weitere Vorteile und vorteilhafte Ausgestaltungen der Erfindung sind der nachfolgenden Zeichnungen, deren Beschreibung und den Patentansprüchen einnehmbar. Dabei sind nur einige Prozessketten Schritt für Schritt dargestellt und erläutert. Das zu den einzelnen Prozessschritten einer Prozesskette Gesagte gilt auch im Zusammenhang mit den anderen Prozessketten.

### Zeichnungen

Es zeigen:
**Figur 1a und 1b****:** eine Schematische Darstellung einer ursprünglich zylindrischen Bohrung, die mit Hilfe des erfindungsgemäßen Verfahrens konifiziert wurde,
**Figur 2****:** Das zylindrische Vorhonen als ersten Schritt der erfindungsgemäßen Prozesskette
**Figur 3****:** eine erste Alternative des erfindungsgemäßen Honprozesses,
**Figur 4****:** eine zweite Alternative des erfindungsgemäßen Honprozesses,
**Figur 5****:** Das Fertighonen in einer ersten Ausführungsform,
**Figur 6****:** den vierten Prozessschritt das Glätthonen mit federbelasteten Honleisten,
**Figur 7****:** eine Darstellung der ersten Alternative des erfindungsgemäßen Konischhonens,
**Figur 8****:** eine Darstellung der zweiten Alternative des erfindungsgemäßen Konischhonens,
**Figur 9****:** verschiedene Möglichkeiten des Glättens (vierter Prozessschritt),
**Figur 10****:** eine Illustration des dritten und vierten Prozessschrittes mit dynamischer Zustellung,
**Figur 11****:** ein Kombinationswerkzeug ein Honwerkzeug mit doppelter Zustellung für die Prozessschritte das Vorhonen und das konisch Honen,
**Figur 12****:** eine Darstellung eines doppelt zustellbaren Honwerkzeugs für das Fertighonen und das Glätthonen.

### Beschreibung der Ausführungsbeispiele

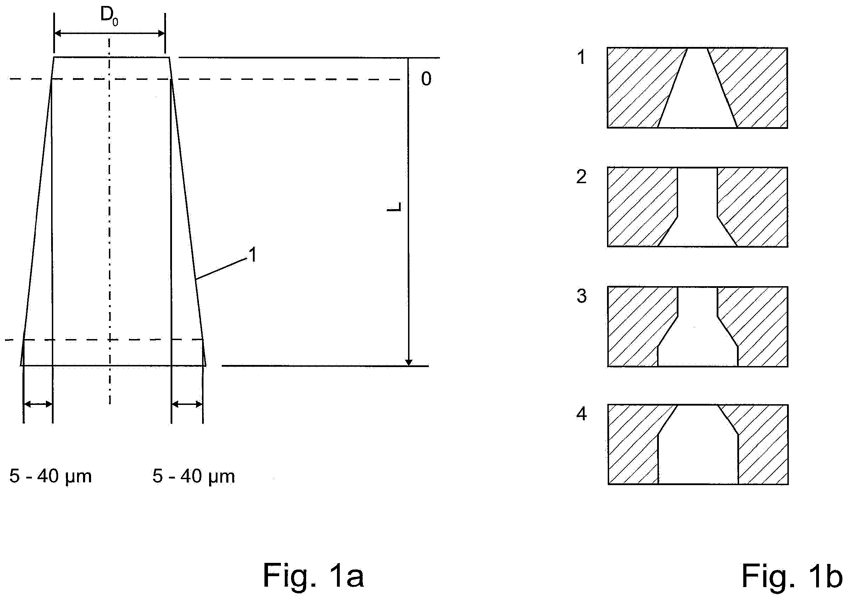

In der Figur 1a ist eine Zylinderbohrung mit einem Durchmesser Do mm und einer Bohrungslänge L schematisch dargestellt.

Der Durchmesser D₀ bezeichnet den Durchmesser der Bohrung nach dem Vorhonen, wenn die Bohrung noch zylindrisch ist. Das heißt die Bohrung hat über die gesamte Länge L den Durchmesser D₀.

Ziel des erfindungsgemäßen Verfahrens ist es, eine Bohrung herzustellen, die überwiegend konisch ist. Im dargestellten Beispiel der Figur 1 ist nach der Durchführung des erfindungsgemäßen konisch Honens die Bohrung über die gesamte Länge L konisch. Beispielhaft sind die zugehörigen Durchmesser D₀ in einer ersten Messebene unterhalb der Oberkannte der Bohrung und in einer zweiten Messebene, die in unmittelbarer Nähe des unteren Endes der Bohrung angeordnet ist, (+0,010 bis +0,080 mm) in der Figur 1 eingetragen. Die Mantellinie der konisch gehonten Bohrung ist der Figur 1 mit 1 bezeichnet. Prinzipiell gilt für alle Figuren, dass gleiche Bezugszeichen für die gleichen Bauteile beziehungsweise Vorgänge verwendet werden und nur jeweils die Unterschiede erläutert werden. Prinzipiell gilt ansonsten das bezüglich der anderen Ausführungsbeispiele gesagte entsprechend.

In Figur 1b sind die Bohrungsformen dargestellt, die ebenfalls funktionsrelevant und vorteilhaft sind, jedoch von der konischen Bohrung abweichend mit dem vorgeschlagenen Verfahren nach entsprechender Parametrisierung herstellbar sind.

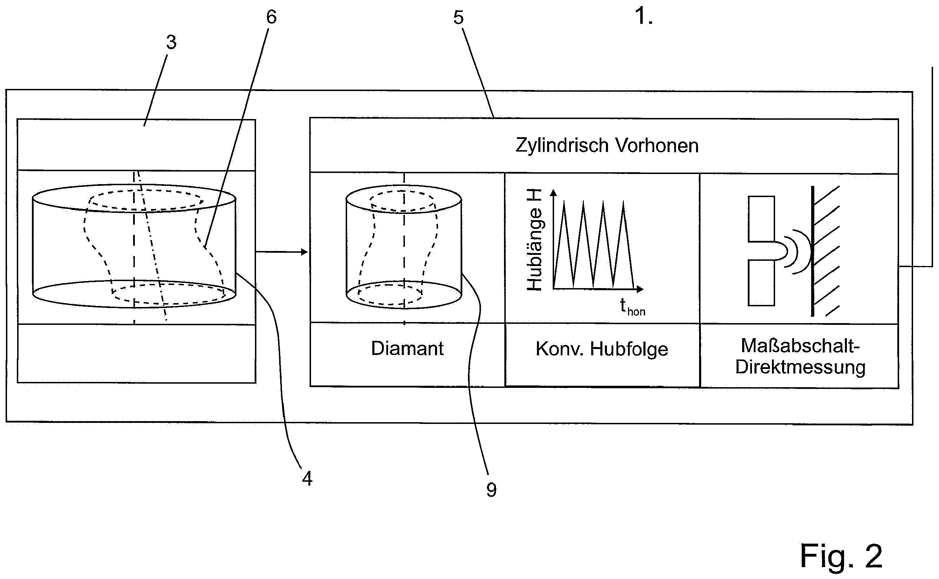

In der Figur 2 ist das Vorbereiten der Bohrung auf das erfindungsgemäße konisch Honen schematisch dargestellt. Damit dieser Bearbeitungsvorgang reproduzierbar, schnell und kostengünstig durchgeführt werden kann, muss die zu bearbeitende Bohrung vorbereitet werden. In einem der eigentlichen Prozesskette vorgelagerten Bearbeitungsschritt 3 wird eine Bohrung in das Werkstück eingebracht. Dies kann zum Beispiel durch Feinbohren, Schrupphonen oder Vorhonen erfolgen. Dieser Prozessschritt ist in der Figur 2 mit in dem Bezugszeichen 3 bezeichnet. Die gewünschte zylindrische Bohrung ist in dem Block 3 durch die Linien 4 angedeutet. Der Rohling in dem die Bohrung angebracht wird, ist durch unterbrochene Linien 6 angedeutet.

In einem Block 5 ist der erste Prozessschritt ("Zylindrisch Honen") der erfindungsgemäßen Prozesskette schematisch dargestellt. Es handelt sich dabei um einen konventionellen Honvorgang mit dessen Hilfe, die zuvor beispielsweise durch Feinbohren hergestellte zylindrische Bohrung hinsichtlich Geometrie, Durchmesser und Oberfläche weiter verbessert wird. Das Vorhonen kann mit einem konventionellen Honwerkzeug durchgeführt werden, dessen Honleisten z. B. mit Diamant als Schleifstoff bestückt sind. Der Hub beim "zylindrisch Honen" ist konstant. Dieser Sachverhalt ist in dem mittleren Teil des Blocks 5 durch ein Diagramm welches die Hublänge H über der Hondauer tₕₒₙ darstellt. Das zylindrische Honen wird beendet, sobald eine In-Prozess-Messung das Erreichen des Sollwerts detektiert.

Nach dem Ende des ersten Prozessschrittes ist somit eine Bohrung geschaffen, deren Geometrie sehr genau einem Zylinder entspricht. Außerdem weisen alle Zylinderbohrungen bei einer Serienfertigung eine sehr ähnliche Oberflächenstruktur auf. Beides zusammen ermöglicht es, auch den nachfolgenden Prozessschritt das "konisch Honen" mit einer geringen Serienstreuung und reproduzierbaren Ergebnissen effizient und prozesssicher durchzuführen. Eine Alternative dazu stellt der Prozessschritt "zylindrisch Feinbohren" dar.

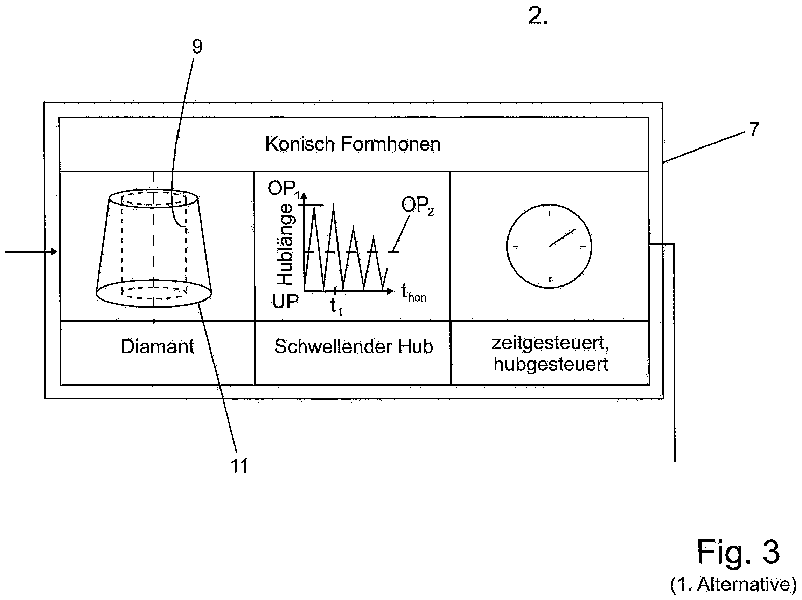

Prinzipiell ist es möglich, die Bohrung auf zwei verschiedene erfindungsgemäße Weisen zu konifizieren. In der Figur 3 ist eine erste Alternative des zweiten Prozessschrittes "konisch Honen" in einem Block 7 dargestellt. Im linken Teil des Blocks 7 ist der Übergang von der gestrichelt dargestellten zylindrischen Bohrung 9 in die gewünschte konische Bohrung 11 schematisch und stark übertrieben dargestellt. In der Mitte des Blocks 7 ist der zeitliche Ablauf des zweiten Prozessschritts "konisch Honen" schematisch dargestellt. Dabei ist die Hublänge H des Honwerkzeugs über der Zeit t dargestellt. Dabei hat jeder Hub des Honwerkzeugs zwei Umkehrpunkte nämlich einen unteren Umkehrpunkt UP und einen oberen Umkehrpunkt OP. Die maximale Hublänge Hₘₐₓ, die im zweiten Prozessschritt gefahren wird, ist in dem Block 7 durch den oberen Umkehrpunkt OP1 und den unteren Umkehrpunkt UP bestimmt. Der zweite Prozessschritt beginnt mit einem oder einigen wenigen Hüben mit konstanter Hublänge wobei die Hublänge OP1-UP ist. Zum Zeitpunkt t₁, wenn sich die Honleisten an die zu bearbeitende Bohrung, die noch zu diesem Zeitpunkt noch zylindrisch ist, angelegt haben, wird die Hublänge H zu reduzieren. Dabei ist ein Charakteristikum des erfindungsgemäßen Verfahrens, dass ein Umkehrpunkt, vorzugsweise der untere Umkehrpunkt UP unverändert bleibt und der obere Umkehrpunkt OP schrittweise reduziert wird bis ein vorgegebener Grenzwert OP2 erreicht ist. Danach endet der Prozessschritt 2.

Die Steuerung des Hubs H des Honwerkzeugs durch eine inkrementelle Reduktion der Hublänge K bei gleichbleibendem unterem Umkehrpunkt UP führt dazu, dass die Bohrung die gewünschte kegelstumpfförmige Mantelfläche erhält. Das erfindungsgemäße Verfahren ist sehr präzise und benötigt nur sehr wenig Zeit, weil mit Erreichen des vorgegebenen Grenzwerts OP2 für den oberen Umkehrpunkt die Honoperation beendet wird.

Dies ist ein wesentlicher Vorteil zu dem aus der DE 10 2013 204 714 A1 bekannten Verfahren. Dort schließt sich noch eine konventionelle Bearbeitungsphase an, die durch einen gleichbleibenden Hub bei reduzierter Hublänge gekennzeichnet ist. Es hat sich überraschenderweise herausgestellt, dass mit dem erfindungsgemäßen Verfahren, das letztendlich nur zwei Abschnitte umfasst, in kurzer Zeit in sehr guter Qualität gut konfizierte oder konische Bohrungen hergestellt werden können.
Es ist auch möglich, durch die geeignete Lage des unteren Umkehrpunkts eine und des oberen Umkehrpunkts OP1 und OP2 eine Bohrung nur bereichsweise aufzuweiten und damit eine Flaschenform der Bohrung herzustellen.

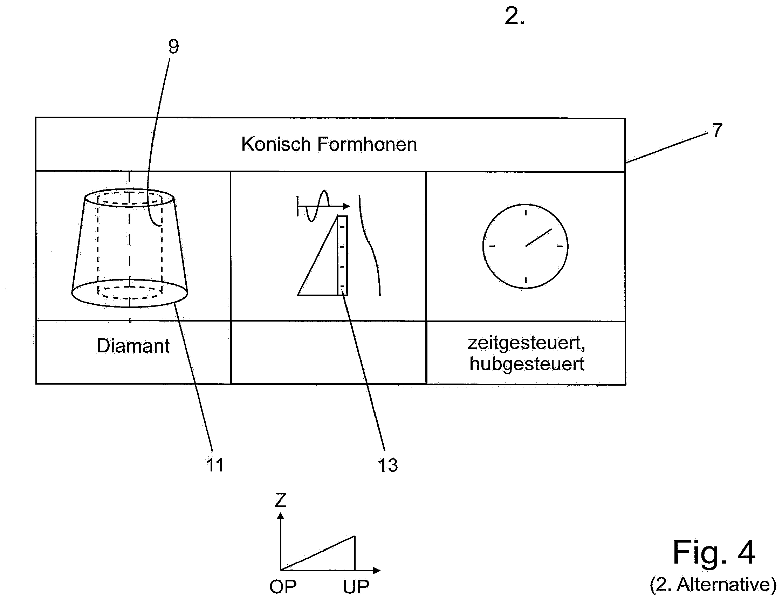

Der zweite Prozessschritt gemäß Figur 3 wird entweder zeitgesteuert oder in Abhängigkeit der Zahl der durchgeführten Hübe des Honwerkzeugs durchgeführt oder durch Erreichen des Hublagenendwertes OP2. In der Figur 4 ist eine zweite Alternative des zweiten Prozessschritts "konisch Honen" dargestellt.

Bei dieser Alternative des zweiten Prozessschritts erfolgt die Zustellung der Honleisten 13 in Abhängigkeit der Position des Honwerkzeugs in der zu bearbeitenden Bohrung. Dies bedeutet, dass am oberen Ende der Bohrung, in der Nähe des oberen Umkehrpunkts OP 1 die Honleisten weniger weit zugestellt sind als am unteren Umkehrpunkt UP. Dieser Zusammenhang ist in einem Diagramm, in dem die Zustellung Z in Abhängigkeit der Position des Honwerkzeugs dargestellt ist in Form einer Linie 15 dargestellt. Dieser lineare Zusammenhang ist selbstverständlich nur beispielhaft. Es ist auch möglich, einen progressiven oder degressiven Zusammenhang zwischen Zustellung Z und der Position des Honwerkzeugs zwischen oberen Umkehrpunkt und unterem Umkehrpunkt vorzugeben und die Zustellung des Honwerkzeugs entsprechend zu steuern.

Es ist auch möglich, dass die Kennlinie der Zustellung während der Bearbeitung ändert. Dadurch ist es möglich, die Belastung der Honleisten 13 zu vergleichmäßigen und Überbeanspruchungen zu vermeiden.

Der zweite Prozessschritt wird entweder zeit- oder hubgesteuert abgearbeitet.

Auch bei diesem Verfahren ist es möglich, nicht nur konische Bohrungen zu erzeugen. Es ist vielmehr auch möglich, eine Flaschenform der Bohrungen zu erzeugen und bei Bedarf ein Vorweiten der zylindrischen Bohrung am oberen Ende der Bohrung und/oder am unteren Ende der Bohrung vorzunehmen.

Diese Alternative setzt ein Honwerkzeug voraus, das zum Formhonen geeignet ist und die positionsabhängige Zustellung der Honleisten ermöglicht. Ein solches Honwerkzeug ist beispielsweise aus der DE 10 2007 038 123 der Anmelderin bekannt. Aber auch die äquidistante Veränderung der Zustellung Z in Abhängigkeit der Hubposition des Honwerkzeugs konform zur flaschenhalsförmigen Soll-Mantellinie ermöglicht die Herstellung der Flaschenhalsbohrung.
Es ist aber auch möglich die Prozessschritte "Konisch Honen mit abnehmendem Hub" und "Konisch Honen mit dynamischer Zustellung nacheinander auszuführen. Dadurch werden die durch den abnehmenden Hub erzeugten Umsteuerbögen im Bereich des sich ändernden oberen Umkehrpunkts OP durch das anschließende Honen mit dynamischer Zustellung abgetragen werden. Dann entsteht ein Honbild mit einheitlicher Struktur bezüglich Honwinkel und Rauheit. Die so topographisch homogenisierte und formverbesserte Bohrungsfläche erleichtert und beschleunigt den nachfolgenden Prozessschritt "Glätten mit Federkraft".

Es geht also darum, dass beide Varianten des zweiten Prozessschrittes in der beschriebenen Reihenfolge kombiniert werden. Die Kombination kann in unterschiedlichen Bearbeitungsstationen erfolgen. Ebenso ist es möglich, beide Operationen auf einer Spindel mit einem doppelt zugestelltem Werkzeug, bestückt mit unterschiedlichen Honleisten oder auch mit einem einfach zugestelltem Werkzeug mit einer Honleistenspezifikation nacheinander durchzuführen.

In jedem Fall muss jedoch sicher gestellt sein das zunächst die Bearbeitung mit einem veränderlichen Hub und dann die Bearbeitung mit einer veränderlichen Zustellung erfolgt. Es gibt also maximal vier Schritte für die Formhonbearbeitung von nicht zylindrischen rotationssymmetrischen Bohrungen:
Honen einer zylindrischen Bohrung
Konisch Honen mit veränderlicher Hublänge
Konisch Honen mit veränderlicher Zustellung
Glätthonen mit federgelagerten Honleisten

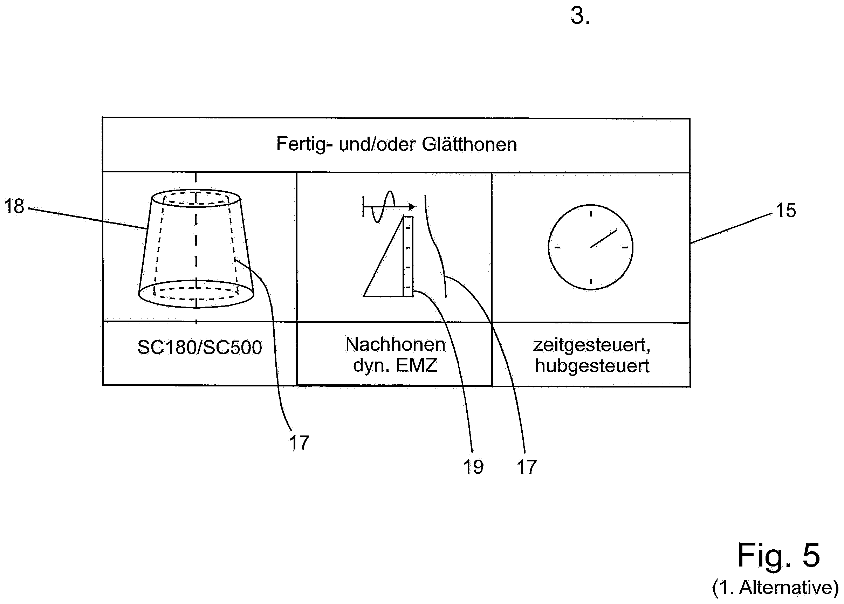

In der Figur 5 ist der dritte Prozessschritt "Fertighonen" optional in Kombination mit dem vierten Prozessschritt "Glätthonen" ebenfalls in einer schematischen Darstellung in einem Block 15 gezeigt. Die im vorangegangen Prozessschritt konisch gehonte Bohrung ist mit dem Bezugszeichen 17 versehen. Ziel des dritten Prozessschritts "Fertighonen" ist es, unter Beibehaltung der konischen beziehungsweise der Geometrie der Bohrung 17 deren Oberfläche entsprechend den Anforderungen des Einsatzfalls weiter zu bearbeiten. Dies kann, wie in der Figur 5 dargestellt, durch ein Honen mit dynamischer Zustellung ähnlich der zweiten Variante des zweiten Prozessschritts (siehe Figur 4) erfolgen. In diesem Fall können andere Schneidstoffe in den Honleisten 19 eingesetzt. Es kann zum Beispiel auf SiliziumCarbid als Schneidstoff gewechselt werden. Ansonsten erfolgt das Fertighonen gemäß der in der Figur 5 dargestellten ersten Alternative ebenfalls mithilfe eines Honwerkzeugs, das die Zustellung der Honleisten 19 in Abhängigkeit der Position des Honwerkzeugs in der Bohrung ermöglicht. Dieser dritte Prozessschritt erfolgt ebenfalls zeitgesteuert oder hubgesteuert oder durch eine pneumatische Inprozess-Messung, die bei allen Operationen der konischen Formgebung und Oberflächenglättung eingesetzt werden kann.

Es ist auch möglich, dass direkt im Anschluss an diesen dritten Prozessschritt der vierte Prozessschritt das "Glätthonen" angeschlossen wird.

In diesem Fall werden die Honleisten 19, welche zum Fertighonen eingesetzt wurden, außer Eingriff mit der Bohrung gebracht und es wird ein weiterer Satz Honleisten (nicht dargestellt in Figur 5) in Eingriff mit der konisch gehonten Bohrung 17 gebracht, welche die Oberfläche der konischen Bohrung glätten. Auch dieser vierte Bearbeitungsschritt/Prozessschritt erfolgt zeitgesteuert oder hubgesteuert.

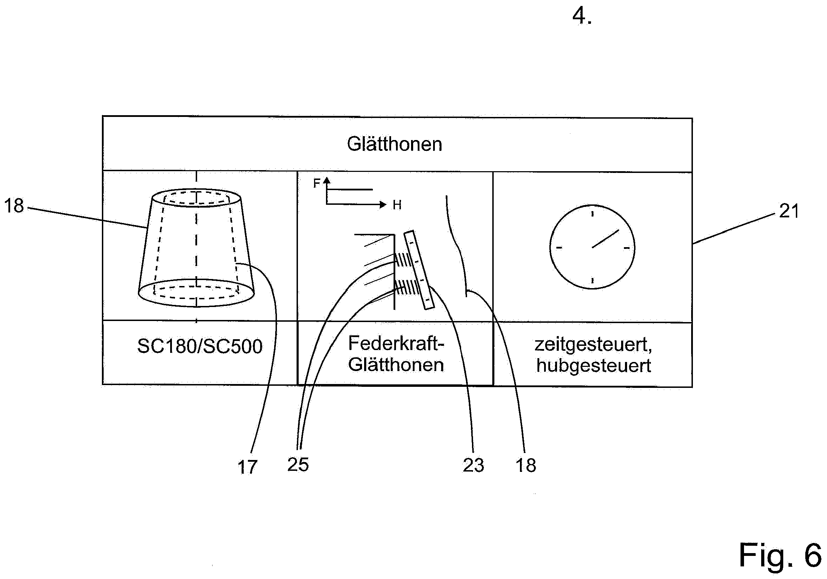

In der Figur 6 ist eine alternative Ausführungsform des vierten Prozessschrittes "Glätthonen" dargestellt. Dabei werden Honleisten 23 federnd gegen die zu bearbeitende und fertig gehonte Bohrung 18 gepresst. Dies ist im mittleren Teil des Blocks 21 durch ein Diagramm, welches die Anpresskraft F über dem Hub H zweigt, veranschaulicht. Durch das Glätthonen wird die Geometrie der fertig gehonten Bohrung 18 nicht mehr geändert. Auch dieser vierte Prozessschritt kann zeitgesteuert oder hubgesteuert erfolgen.

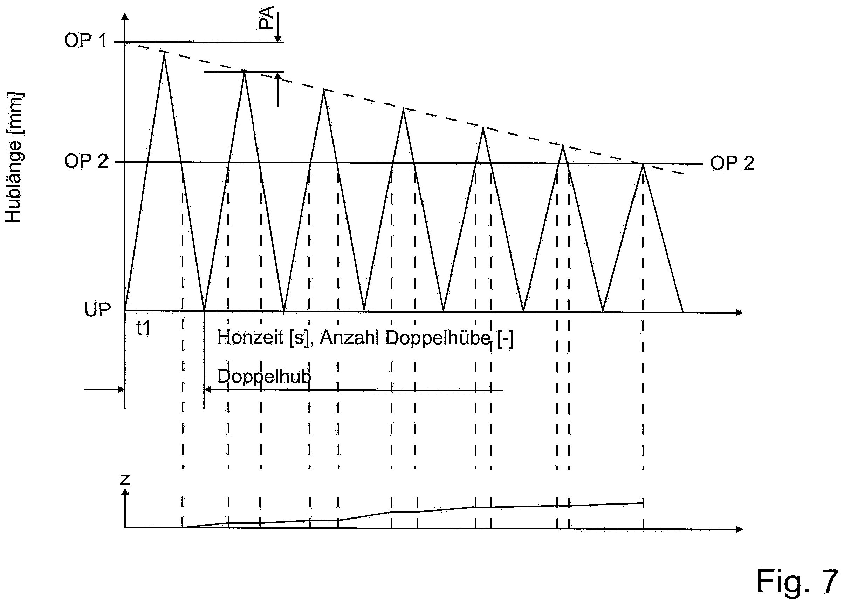

In der Figur 7 ist die erste Alternative des zweiten Prozessschrittes, die im Zusammenhang mit der Figur 3 bereits kurz erwähnt wurde, nochmals verdeutlicht und veranschaulicht. Die Figur 7 zeigt ein Diagramm, in der auf der X-Achse entweder die Honzeit in Sekunden beziehungsweise die Zahl der Doppelhübe des Honwerkzeug aufgetragen ist. In anderen Worten: Die Figur 7 veranschaulicht eine Alternative des erfindungsgemäßen Prozessschrittes "konisch Honen", die sowohl zeitgesteuert als auch hubgesteuert betrieben werden kann.

Das Honwerkzeug führt, wie allgemein bekannt ist, eine Hubbewegung durch, wobei es zwischen einem unteren Umkehrpunkt UP und einem oberen Umkehrpunkt OP oszilliert.

Bei dem zweiten Prozessschritt werden zunächst einige Hübe des Honwerkzeugs mit maximaler Hublänge OP1-UP durchgeführt, bis sich die Honleisten an der noch zylindrischen Bohrung angelegt haben. Dies Hübe sind in der Figur 7 nicht dargestellt. Zum Zeitpunkt t = t1 ist die Bohrung noch zylindrisch.

Die gewünschte konische Form der Bohrung wird erfindungsgemäß dadurch erreicht, dass die Hublänge H von Hub zu Hub reduziert wird, ausgehend von einem maximalen Hub Hmax = OP1 - UP bis hin zu einem minimalen Hub Hmin OP2 - UP. Dabei bleibt die Lage des unteren Umkehrpunkts UP unverändert. In anderen Worten: der untere Teil der Bohrung wird häufiger von den Honleisten des nicht dargestellten Honwerkzeug bearbeitet als der obere Teil der Bohrung. Dadurch ergibt sich die gewünschte konische Form der Bohrung.

Sobald die Hublänge den Grenzwert OP2 erreicht oder unterschritten hat, endet der erfindungsgemäße zweite Prozessschritt und die konische Bohrung ist hergestellt.

Wenn anstelle einer konischen Bohrung eine sogenannte Flaschenform gehont werden soll, das heißt die Bohrung hat einen engeren oberen zylindrischen Abschnitt, daran anschließend einen konischen Teil und weiter daran anschließend einen weiteren zylindrischen Abschnitt, dann kann dies mit dem erfindungsgemäßen Verfahren durch die geeignete Wahl des unteren Umkehrpunkts UP ebenfalls sehr kostengünstig und prozesssicher erreicht werden. In diesem Fall würde der untere Umkehrpunkt UP etwas weiter in Richtung des oberen Umkehrpunkts OP verlagert werden.

In einer besonders vorteilhaften Ausgestaltung des erfindungsgemäßen zweiten Prozessschrittes erfolgt die Zustellung der Honleisten immer und ausschließlich während der Zeit in der sich das Honwerkzeug zwischen dem Grenzwert OP2 und dem unteren Umkehrpunkt UP bzw. UP2 befindet. Dies ist in der Figur 7 durch ein weiteres Diagramm dargestellt. Dies bedeutet, dass immer dann, wenn sich das Honwerkzeug zwischen OP1 und OP2 befindet keine Zustellung erfolgt. Nur wenn sich das Werkzeug in dem Bereich zwischen OP2 und UP befindet, erfolgt eine Zustellung.

Dies hat mehrere positive Effekte: Zum einen wird immer kurzzeitig am unteren Ende der aufzuweitenden Bohrung die Anpresskraft erhöht und in Folge dessen findet dort ein erhöhter Materialabtrag statt, sodass die gewünschte konische Form der Bohrung in sehr guter Näherung erreicht wird. Außerdem ist diese Vorgehensweise steuerungstechnisch besonders einfach zu beherrschen, weil konstante Hubgeschwindigkeit vorausgesetzt, die Zustellung beginnen kann, sobald das Honwerkzeug auf dem Weg zum unteren Umkehrpunkt den Grenzwert OP2 erreicht hat. Auf dem Rückweg vom unteren Umkehrpunkt in Richtung des oberen Umkehrpunkts wird an der gleichen Stelle die Zustellbewegung unterbrochen.

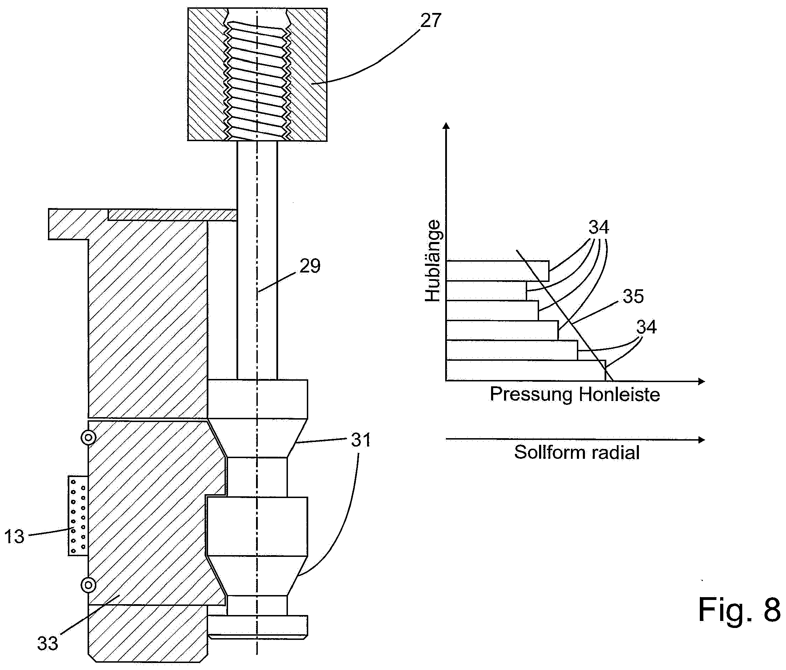

In der Figur 8 ist die zweite Ausführungsform des zweiten Prozessschritts nochmals näher erläutert. Hierbei ist zu sehen, wie durch eine elektromechanische Zustellung 27 über eine Zustellstange 29 und Zustellkonusse 31 eine Tragleiste 33, welche die in Figur 4 dargestellte Honleiste 13 trägt, in Abhängigkeit des Hubs zugestellt wird. Dabei ist in dem Diagramm einerseits die Pressung der Honleiste in Form von Blöcken 34 dargestellt. Die Zustellung ist als gerade Linie 35 in diesem Diagramm aufgetragen.

Die elektromechanische Zustellung 27 und deren Umsetzung in eine Zustellbewegung der Honleiste 13 ist beispielhaft in der DE 103 58 150 A1 beschrieben.

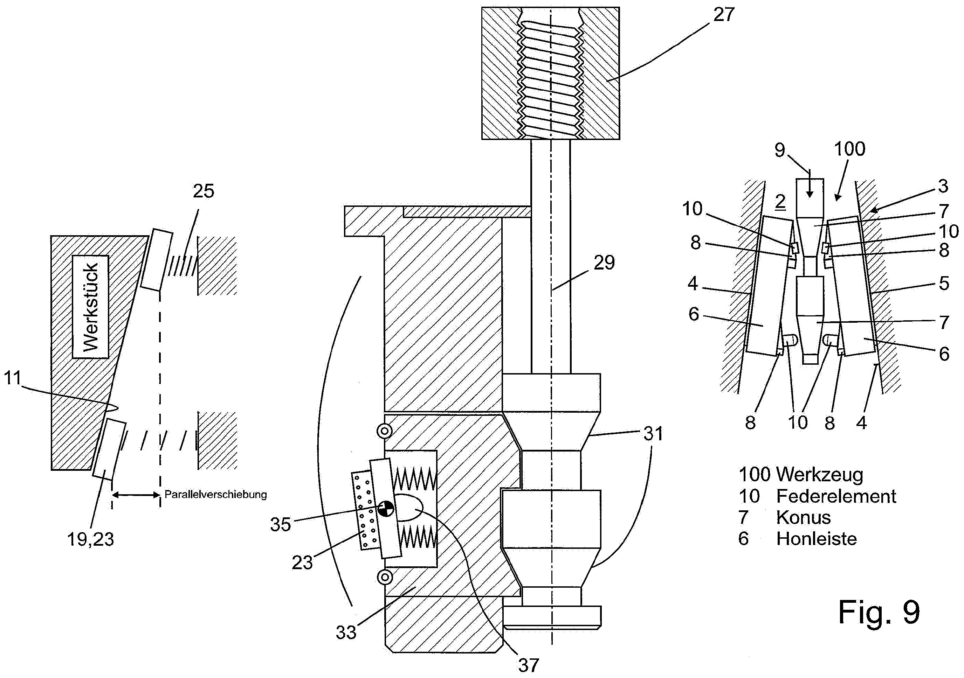

In der Figur 9 sind der dritte und der vierte Prozessschritt (Fertighonen und Glätthonen) beziehungsweise deren Realisierung dargestellt.

Im linken Teil der Figur 9 ist das Ziel, nämlich, dass die Honleisten 19 beziehungsweise 23 sich für das Fertighonen beziehungsweise das Glätthonen an die konische Bohrung 11 anlegen, dargestellt. Dies erfolgt durch ein nachgiebiges Element, das als Feder (Spiralfeder, Blattfeder oder ähnliches) ausgebildet sein kann. Das Honwerkzeug ist in dem linken Teil der Figur 9 in zwei verschiedenen Positionen, einmal in der Nähe des unteren Umkehrpunkts UP und einmal in der Nähe des oberen Umkehrpunkts OP dargestellt.

In der Mitte der Figur 9 ist nun eine erste Realisierungsmöglichkeit eines Werkzeugs zum Fertighonen und/oder Glätthonen dargestellt. Dabei ist die Umsetzung einer Zustellbewegung genauso wie in Figur 8. Der einzige Unterschied besteht darin, dass an die Tragleisten 33 eine Honleiste 23 tragen, die pendeln gelagert und mittels Federn 25 gegen die Wand der Bohrung 11 gedrückt wird. Der Drehpunkt dieser Honleiste 23 ist in der Figur 9 mit 35 bezeichnet. Dabei ist zu beachten, dass der Zapfen, der den Drehpunkt bildet in einem Langloch 37 geführt ist, sodass die Honleiste 23 sich optimal an die Kontur der Wand 11 der Bohrung anlegen kann.

Im rechten Teil der Figur 9 ist ein weiteres Ausführungsbeispiel eines geeigneten Werkzeugs zum Fertighonen und zum Glätten dargestellt. Es ist aus der DE 10 2014 000 476 A1 bekannt auf die hiermit Bezug genommen wird.

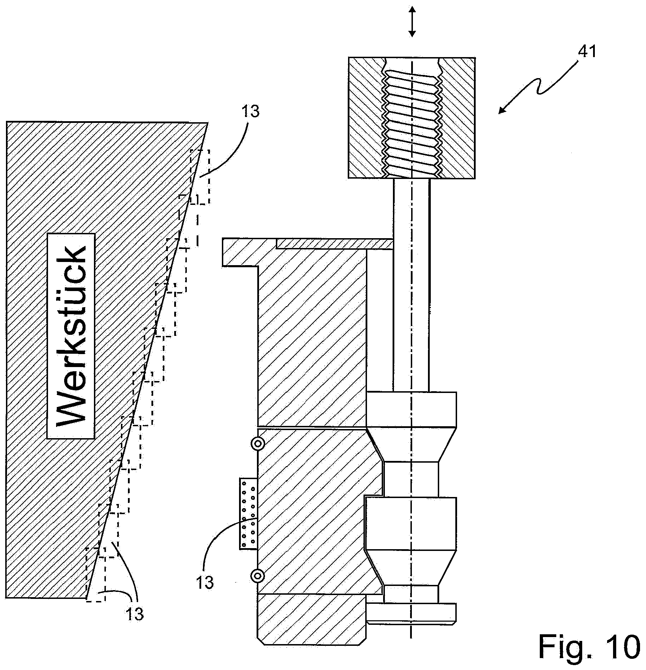

In der Figur 10 ist noch einmal die Realisierung der dynamischen Zustellung gemäß Figur 2 (zweite Alternative des zweiten Prozessschritts) und deren Realisierung in einem Honwerkzeug dargestellt. Die gestrichelt dargestellten Blöcke 39 stellen die Honleiste 13 in verschiedenen Positionen in Abhängigkeit der Hubposition des Honwerkzeugs 41 dar. Der Hub des Honwerkzeugs ist in der Figur 10 durch einen Doppelpfeil angedeutet.

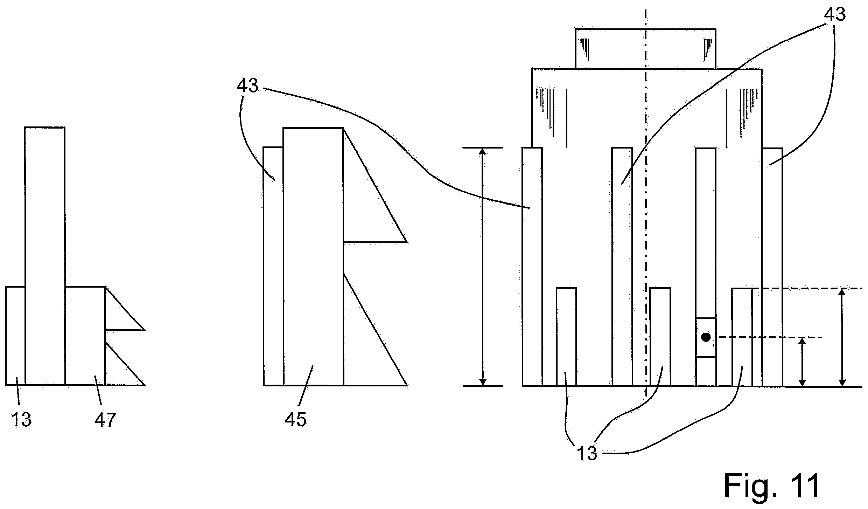

In der Figur 11 ist schematisch ein Honwerkzeug dargestellt, das über zwei Gruppen von Honleisten verfügt. Mit diesem Honwerkzeug kann der erste Prozessschritt (zylindrisch Vorhonen) und der zweite Prozessschritt (konisch Honen) durchgeführt werden. Zur Durchführung des ersten Prozessschrittes werden die langen Honleisten 43 in Eingriff mit der zu bearbeitenden Bohrung (nicht dargestellt) gebracht. Die Zustellung erfolgt über zwei Zustellkonusse (nicht dargestellt), die mit entsprechenden schrägen Flächen der Tragleisten 45 in an sich bekannter Weise zusammenwirken.

Die Honleisten 13 dienen dazu, die vorgehonte Bohrung konisch zu honen. Diese Honleisten 13 sind relativ kurz verglichen mit den Honleisten 43 zum Vorhonen. Auch diese Honleisten 13 werden über Tragleisten 47 und eine zweite Zustelleinrichtung (nicht dargestellt) des Honwerkzeugs zugestellt.

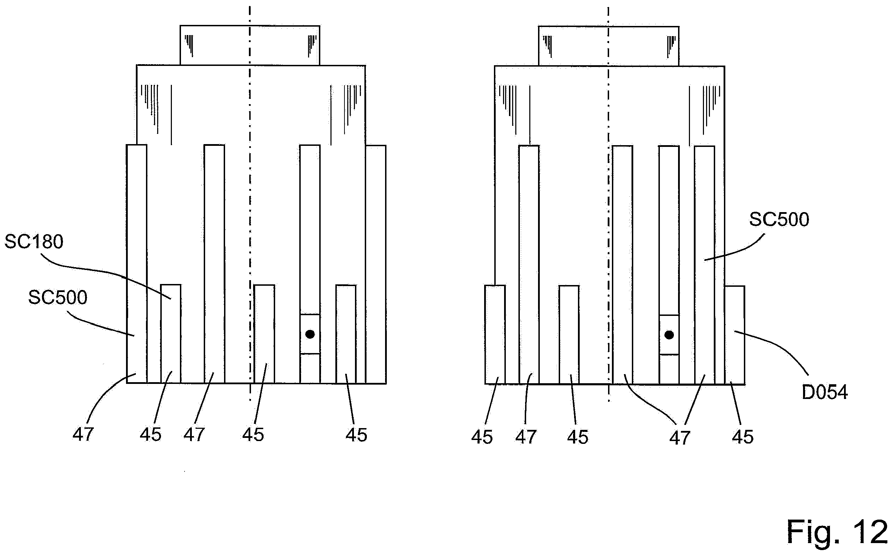

In der Figur 12 ist ein Ausführungsbeispiel eines doppelt zustellbaren Honwerkzeugs dargestellt. Mithilfe dieses Werkzeugs können die Prozessschritte 3 (Fertighonen) und 4 (Glätthonen) durchgeführt werden. Das Honwerkzeug an sich ist aus dem Stand der Technik bekannt.

Dieses Werkzeug hat verschiedene Honleisten. Die relativ kurzen Honleisten 45 werden zum Fertighonen eingesetzt. Die relativ langen Honleisten 47 werden zum Glätthonen eingesetzt.

### Varianten

1. Verfahren zur Konifizierung einer zylindrischen Bohrung mit einem Honwerkzeug, wobei das Honwerkzeug Honleisten (13) umfasst deren Länge (L_{Hl}) kleiner als 1/2 der Länge (L_{B}) der zu bearbeitenden Bohrung ist, umfassend die Schritte:
Anlegen der Honleisten (13) des Honwerkzeugs an die Bohrung,
Honen der Bohrung über ihre gesamte Länge (L_{B}) mit einem maximalen Hub (H_{Max} = OP1 - UP),
Honen der Bohrung mit abnehmendem Hub (H), wobei ein unterer Umkehrpunkt (UP) des Honwerkzeugs im Wesentlichen unverändert bleibt und
Beenden des Honvorgangs sobald der obere Umkehrpunkt (OP) einen vorgegebenen Endwert (OP2) erreicht hat.
2. Verfahren nach Variante 1, dadurch gekennzeichnet, dass eine Zustellung des Honwerkzeugs nur erfolgt, wenn sich das Honwerkzeug in der Nähe des unteren Umkehrpunkts (UP) befindet.
3. Verfahren nach Variante 2, dadurch gekennzeichnet, dass eine Zustellung des Honwerkzeugs nur erfolgt, wenn sich das Honwerkzeug zwischen dem vorgegebenen Endwert (OP2) und dem unteren Umkehrpunkt (UP) befindet.
4. Verfahren nach einer der vorhergehenden Varianten, dadurch gekennzeichnet, dass mit abnehmenden Hub die Drehzahl der Honspindel erhöht wird.
5. Verfahren nach einer der vorhergehenden Varianten, dadurch gekennzeichnet, dass der maximale Hub (H_{Max} = OP1 - UP) mehr als doppelt so groß ist wie der minimale Hub (H_{Min} = OP2 - UP).
6. Verfahren zur Konifizierung einer Bohrung mit einem Feinbohrwerkzeug, dadurch gekennzeichnet, dass mindestens eine Schneide des Feinbohrwerkzeugs in Abhängigkeit seiner Position in der zu bearbeitenden Bohrung zugestellt wird.
7. Verfahren nach einer der vorhergehenden Variante, dadurch gekennzeichnet, dass eine Zustellkraft mit der die Honleisten (13) gegen die Bohrung gepresst werden in Abhängigkeit einer Position des Honwerkzeugs in der Bohrung gesteuert wird.
8. Verfahren zur Konifizierung einer zylindrischen Bohrung, wobei die für das Honen relevanten Parameter, insbesondere die Härte, der Bohrung gleich sind, umfassend die Schritte:
Anlegen der Honleisten (13) des Honwerkzeugs an die Bohrung,
Honen der Bohrung über ihre gesamte Länge (L_{B}) und konstanter Anpresskraft der Honleisten (13) auf die Bohrung,
Honen der Bohrung wobei eine Zustellkraft (Z) mit der die Honleisten (13) gegen die Bohrung gepresst werden in Abhängigkeit einer Position des Honwerkzeugs in der Bohrung gesteuert wird.
9. Verfahren nach Variante 7 oder 8, dadurch gekennzeichnet, dass die Zustellkraft (Z) mit zunehmendem Abstand des Honwerkzeugs von einem Umkehrpunkt (OP) ansteigt.
10. Verfahren nach Variante 8, dadurch gekennzeichnet, dass die Zustellkraft (Z) mit zunehmendem Abstand des Honwerkzeugs von einem Umkehrpunkt (OP) linear, progressiv oder degressiv ansteigt.
11. Verfahren nach einer der Varianten 8 bis 10, dadurch gekennzeichnet, dass das Honen der Bohrung mit abnehmendem Hub (H) erfolgt, wobei ein unterer Umkehrpunkt (UP) des Honwerkzeugs im Wesentlichen unverändert bleibt.
12. Verfahren nach Variante 1, dadurch gekennzeichnet, dass der Honvorgang beendet wird, sobald der obere Umkehrpunkt (OP) einen vorgegebenen Endwert (OP1) erreicht hat.
13. Prozesskette zur formgebenden Bearbeitung von Bohrungen mit umfassend die in den Spalten der Tabelle angegebenen Prozessschritte:

| **Prozessschritt** | **Prozesskette** | | | | | | | | | |
|---|---|---|---|---|---|---|---|---|---|---|
| Zylindrisch Honen | X | X | X | X | | | | | | |
| konisch Feinbohren | | | | | | | | | X | X |
| Konisch Honen mit abnehmendem Hub | X | | X | | X | | X | | | |
| Konisch Honen mit dynamischer Zustellung | X | X | | X | X | X | | X | X | |
| Glätten mit Federkraft | X | X | X | | X | X | X | | X | X |

14. Prozesskette zur formgebenden Bearbeitung von zylindrischen Bohrungen mit mindestens zwei Honwerkzeugen, umfassend die Schritte:
Vorhonen einer Bohrung,
Konifizieren der Bohrung nach einem Verfahren gemäß einer der Varianten 1 bis 12,
Fertighonen der Bohrung und
Glätten der Bohrung.

## Patentansprüche

1. Verfahren zur Konifizierung einer Bohrung mit einem Feinbohrwerkzeug, **dadurch gekennzeichnet, dass** mindestens eine Schneide des Feinbohrwerkzeugs in Abhängigkeit seiner Position in der zu bearbeitenden Bohrung zugestellt wird, wobei der Durchmesser der Bohrung sich nach dem Konifizierung über mehr als die halbe Länge der Zylinderbohrung kontinuierlich ändert.

2. Verfahren nach Anspruch 1, **dadurch gekennzeichnet, dass**, um die Konifizierung der zylindrischen Bohrung abzuschließen ein prozessschritt "Konisch Honen mit dynamischer Zustellung" auf das Feinbohren folgt, wobei die Zustellung der Honleisten gegen die Bohrung in Abhängigkeit von einer Position des Honwerkzeugs in der Bohrung erfolgt.

3. Verfahren nach dem vorhergehenden Anspruch, **dadurch gekennzeichnet, dass** die Bohrung in einem letzten Bearbeitungsschritt durch Glätthonen geglättet wird.

4. Verfahren nach dem vorhergehenden Anspruch, **dadurch gekennzeichnet, dass** im Anschluss an das Feinbohren und vor dem Glätthonen ein Prozessschritt Fertighonen durchgeführt wird, bei dem sich die Zustellkraft, mit der die in diesem Schritt verwendeten Honleisten gegen die Bohrung gepresst werden, in Abhängigkeit einer Position des Honwerkzeugs in der Bohrung ändert.

5. Verfahren nach einem der vorhergehenden Ansprüche, **dadurch gekennzeichnet, dass** beim Fertighonen die Zustellkraft in Richtung des unteren Umkehrpunkts UP zu- und in Richtung des oberen Umkehrpunkts abnimmt.

6. Verfahren nach einem der beiden vorhergehenden Ansprüche, **dadurch gekennzeichnet, dass** beim Fertighonen andere Honleisten (19) verwendet werden als beim Glätthonen.

7. Verfahren nach einem der beiden vorhergehenden Ansprüche, **dadurch gekennzeichnet, dass** während dem Prozessschritt "Glätthonen" Honleisten (23) federnd gegen die zu bearbeitende und ggf. fertig gehonte Bohrung (18) gepresst werden.

8. Verfahren nach dem vorhergehenden Anspruch, **dadurch gekennzeichnet, dass** das federnde Anpressen der Honleisten (23) im Prozessschritt "Glätthonen" über ein nachgiebiges Element, das als Feder ausgebildet sein kann, erfolgt.

9. Verfahren nach einem der beiden vorhergehenden Ansprüche, **dadurch gekennzeichnet, dass** der Prozessschritt "Glätthonen" über Honleisten erfolgt, die pendeln gelagert und mittels Federn (25) gegen die Wand der Bohrung gedrückt werden.

10. Verfahren nach dem vorhergehenden Anspruch, **dadurch gekennzeichnet, dass** der Prozessschritt "Glätthonen" über Honleisten (23) erfolgt, die einen Drehpunkt (35) aufweisen, der durch einen Zapfen gebildet ist, der in einem Langloch (37) geführt ist.
